**Europäisches Patentamt**

**European Patent Office**

**Office européen des brevets**

(11) Veröffentlichungsnummer: **0 047 993**
**B1**

# EUROPÄISCHE PATENTSCHRIFT

(45) Veröffentlichungstag der Patentschrift: **03.12.86**

(21) Anmeldenummer: **81107176.0**

(22) Anmeldetag: **11.09.81**

(51) Int. Cl.⁴: **C 08 L 31/02,** C 08 L 31/04, C 08 L 33/08

(54) **Schwingungsdämpfende Folie und Verfahren zu ihrer Herstellung aus wässrigen Kunststoffdispersionen.**

(30) Priorität: **17.09.80 DE 3034949**

(43) Veröffentlichungstag der Anmeldung:
**24.03.82 Patentblatt 82/12**

(45) Bekanntmachung des Hinweises auf die
Patenterteilung:
**03.12.86 Patentblatt 86/49**

(84) Benannte Vertragsstaaten:
**CH DE FR GB IT LI SE**

(56) Entgegenhaltungen:
**FR-A-1 274 569**

(73) Patentinhaber: **HOECHST AKTIENGESELLSCHAFT Postfach 80 03 20 D-6230 Frankfurt am.Main 80 (DE)**

(72) Erfinder: **Küchler, Manfred Bleibiskopfstrasse 5 D-6370 Oberursel/Taunus (DE)**
Erfinder: **Duve, Günther, Dr. Spindelstrasse 36 D-6234 Hattersheim am Main (DE)**
Erfinder: **Ebigt, Joachim, Dr. Frauenlobstrasse 76a D-6000 Frankfurt am Main 90 (DE)**

Courier Press, Leamington Spa, England.

EP 0 047 993 B1

## Beschreibung

Die Erfindung bezieht sich auf eine wäßrige Kunststoffdispersion, die drei verschiedene Polymere und einen faserigen Füllstoff enthält, sowie auf ein Verfahren zu ihrer Herstellung, ihre Verwendung als Ausgangsmaterial für schwingungsdämpfende Folien und eine Folie aus der Kunststoffdispersion.

Es ist bekannt, daß sowohl Mischpolymerisate als auch Polymerisatgemische zur Herstellung schwingungdämpfender Folien geeignet sind; insbesondere wurden Gemische aus Polystyrol und Polymethylmethacrylat, aus Polystyrol und einem Styrol/Methylacrylat-Mischpolymerisat und aus Polymethylmethacrylat und Polyvinylacetat untersucht (vgl. Kolloid-Zeitschrift, Band 148 (1956), Seiten 57 ff).

Ferner ist bekannt, daß Füllstoffe die schalldämpfende Wirkung von Andidröhnmassen, die als Bindemittel ein Acrylestermischpolymerisat, ein Polyvinylpropionat oder ein weichmacherhaltiges Polyvinylacetat enthalten, beeinflussen; dabei werden Füllstoffe wie Vermiculit, Glimmer, Graphit, Kaolin, Chinaclay, Feldspat, Talkum, Asbest, Ruß, Bariumsulfat und Perlite jeweils in einer Menge bis zu 40 Prozent eingesetzt (vgl. Kunststoffe, Band 50 (1960), Seiten 606 ff).

Aus der französischen Patentschrift Nr. 1 274 569 sind Entdröhnungsmittel in wäßriger Dispersionsform bekannt, die Mischungen auf Basis mehrerer verschiedener Vinylhomo- und/oder -copolymerisate mit unterschiedlichen Einfriertemperaturen und gegebenenfalls Füllstoffe enthalten. Sie werden auf die zu entdröhnenden Flächen aufgetragen bzw. aufgespritzt und in der Wärme zu Folien oder Beschichtungen getrocknet, was sehr zeit- und energieaufwendig ist und auf Stahlblech zu Rostbildungen führen kann. Wegen dieser Anwendungsnachteile blieb ihnen eine breite Verwendung bisher versagt.

Ein wichtiges Kriterium für die Anwendbarkeit schwingungsdämpfender Stoffe zur Dämpfung der Biegeschwingungen von harten Platten, insbesondere von Blechen in Blechkonstruktionen von Fahrzeugen aller Art sowie in Maschinen, Geräten und Bauteilen, ist die Temperaturbandbreite der Dämpfung, die bei den meisten technischen Anwendungen der Dämpfungsstoffe für den Frequenzbereich zwischen 100 und 1000 Hertz hauptsächlich interessiert (vgl. Kolloid-Zeitschrift, Band 216 bis 217 (1967), Seiten 64 ff).

Aufgabe der Erfindung ist die Bereitstellung einer wäßrigen Kunststoffdispersion, die einen Füllstoff enthält und zur Herstellung von Folien mit schwingungsdämpfenden Eigenschaften geeignet ist.

Die Erfindung betrifft nun eine schwingungsdämpfende Folie auf Basis von füllstoffhaltigen Mischungen aus mehreren verschiedenen Vinylhomo- und/oder -copolymerisaten mit unterschiedlichen Einfriertemperaturen, welche eine vergrößerte Temperaturbandbreite der optimalen Schwingungsdämpfung bzw. Entdröhnungswirkung besitzt, die dadurch gekennzeichnet ist, daß die Folie

a) 4 bis 54 Gew.-% eines Copolymers aus einem Vinyl- ester einer Monocarbonsäure und einem Acrylsäurealkylester mit einer Einfriertemperatur von höchstens −10°C,

b) 4 bis 54 Gew.-% eines Copolymers aus einem Vinylester einer Monocarbonsäure und einem Acrylsäureester mit einer Einfriertemperatur von 0 bis 20°C,

c) 2 bis 52 Gew.-% eines Homopolymers eines Vinylesters einer Monocarbonsäure mit einer Einfriertemperatur von mehr als 20°C und

d) 10 bis 80 Gew.-% eines faserigen Materials, wobei die Menge der Komponente d) auf die Summe der Polymeren a), b) und c) bezogen ist, enthält und dadurch erhalten wird, daß man ein Gemisch aus

A) 10 bis 85 Gewichtsteilen einer wäßrigen Dispersion eines Copolymers aus einem Vinylester einer Monocarbonsäure und einem Acrylsäureester mit einer Einfriertemperatur von höchstens −10°C,

B) 10 bis 85 Gewichtsteilen einer wäßrigen Dispersion eines Copolymers aus einem Vinylester eine Monocarbonsäure und einem Acrylsäureester mit einer Einfriertemperatur von 0 bis 20°C und

C) 5 bis 80 Gewichtsteilen einer wäßrigen Dispersion eines Homopolymers eines Vinylesters einer Monocarbonsäure mit einer Einfriertemperatur von mehr als 20°C,

wobei die Summe der Gewichtsteile A+B+C 100 Gewichtsteile beträgt, bei einer Temperatur von 10 bis 30°C gleichmäßig in

D) 10 bis 400 Gewichtsteile einer wäßrigen Suspension eines faserigen Materials

einmischt, die Mischung durch Zusatz eines wasserlöslichen Koaguliermittels koaguliert, das Koagulat durch Filtration über ein ebenes Filter als flächigen Filterkuchen isoliert, den Filterkuchen gegebenenfalls mit Hilfe einer Presse unter Druck entwässert, und die erhaltene Folie trocknet.

Die Erfindung betrifft ferner ein Verfahren zur Herstellung einer wäßrigen Kunststoffdispersion auf Basis von mehreren verschiedenen Vinylpolymeren, das dadurch gekennzeichnet ist, daß ein Gemisch aus

A) 10 bis 85 Gewichtsteilen einer wäßrigen Dispersion eines Copolymers aus einem Vinylester einer Monocarbonsäure und einem Acrylsäureester mit einer Einfriertemperatur von höchstens −10°C,

B) 10 bis 85 Gewichtsteilen einer wäßrigen Dispersion eines Copolymers aus einem Vinylester einer Monocarbonsäure und einem Acrylsäureester mit einer Einfriertemperatur von 0 bis 20°C und

C) 5 bis 80 Gewichtsteilen einer wäßrigen Dispersion eines Homopolymers eines Vinylesters einer Monocarbonsäure mit einer Einfriertemperatur von meht als 20°C,

wobei die Summe der Gewichtsteile A+B+C 100 Gewichtsteile beträgt, bei einer Temperatur von 10 bis 30°C gleichmäßig in

D) 10 bis 400 Gewichtsteile einer wäßrigen Suspension eines faserigen Materials eingemischt wird.

Weiterhin betrifft die Erfindung die Verwendung der vorgenannten wäßrigen, füllstoffhaltigen Kunststoffdispersion als Ausgangsmaterial zur Herstellung von schwingungsdämpfenden Folien sowie die aus der Kunststoffdispersion hergestellte Folie.

Die erfindungsgemäße Kunststoffdispersion setzt sich vorzugsweise zusammen aus 30 bis 80 Gewichtsprozent einer wäßrigen Dispersion des Polymers A), 10 bis 35 Gewichtsprozent einer wäßrigen Dispersion des Polymers B), 10 bis 35 Gewichtsprozent einer wäßrigen Dispersion des Polymers C) und 10 bis 80 Gewichtsprozent einer wäßrigen Suspension des Füllstoffs D), wobei die Menge der Suspension von auf die Summe der Dispersionen von A), B) und C) bezogen ist.

Wesentlicher Bestandteil der erfindungsgemäßen Kunststoffdispersion ist ein Gemisch aus drei nach Art und Eigenschaften verschiedenen Polymeren. Polymer a) des in der Dispersion vorliegenden Polymergemischs ist ein Copolymer aus einem Vinylester einer Monocarbonsäure und einem Acrylsäurealkylester, das eine Einfriertemperatur von höchstens −10°C, vorzugsweise von −50 bis −10°C, aufweist. Polymer b) ist eine Copolymer aus einem Vinylester einer Monocarbonsäure und einem Acrylsäureester, das eine Einfriertemperatur von 0 bis 20°C, vorzugsweise 5 bis 18°C, aufweist. Polymer c) schließlich ist ein Homopolymer eines Vinylesters einer Monocarbonsäure mit einer Einfriertemperatur von mehr als 20°C, vorzugsweise von 21 bis 50°C. Besonders vorteilhaft ist ein Gemisch der Polymeren a), b) und c), bei dem sich die Einfriertemperatur des Polymers b) von derjenigen der Polymeren a) und c) jeweils um mindestens 20°C unterscheidet.

Das Polymer a) ist insbesondere ein Copolymer aus 20 bis 45, vorzugsweise 30 bis 40 Gewichtsprozent eines Vinylesters einer Monocarbonsäure mit 2, 3 oder 4 Kohlenstoffatomen und 80 bis 55, vorzugsweise 70 bis 60 Gewichtsprozent eines Acrylsäurealkylesters mit einem höheren Alkylrest, der 6 bis 10, vorzugsweise 8 Kohlenstoffatome aufweist. Geeignete Vinylester sind vorzugsweise Essigsäurevinylester sowie Propionsäurevinylester und Buttersäurevinylester. Als Acrylsäurealkylester mit höherem Alkylrest eignen sich beispielsweise Acrylsäure-2,2-dimethylbutylester, Acrylsäure-3,3-dimethyl- butylester und besonders Acrylsäure-(2-ethyl-hexyl)-ester. Zur Herstellung der erfindungsgemäßen Kunststoffdispersion wird das Polymer a) in Form einer wäßrigen Dispersion eingesetzt, die einen Feststoffgehalt von 35 bis 60, vorzugsweise von 40 bis 55 Gewichtsprozent aufweist und deren Viskosität im Bereich von 0,2 bis 5, vorzugsweise 0,5 bis 3 Pa · s liegt (gemessen im Epprecht-Rheometer STV bei einer Temperatur von 23°C nach DIN 53788).

Das Polymer b) ist insbesondere ein Copolymer aus 55 bis 85, vorzugsweise 60 bis 80 Gewichtsprozent eines Vinylesters einer Monocarbonsäure mit 2, 3 oder 4 Kohlenstoffatomen und 45 bis 15, vorzugsweise 40 bis 20 Gewichtsprozent eines Acrylsäureakylesters mit einem niederen Alkylrest, der 1 bis 4 Kohlenstoffatome aufweist. Geeignete Vinylester sind vorzugsweise Essigsäurevinylester sowie Propionsäurevinylester und Buttersäurevinylester. Als Acrylsäureester mit niederem Alkylrest eignen sich beispielsweise Acrylsäuremethylester, Acrylsäureethyleşter, Acrylsäureproplyester und Acrylsäurebutylester. Zur Herstellung der erfindungsgemäßen Kunststoffdispersion wird das Polymer b) in Form einer wäßrigen Dispersion eingesetzt, die einen Feststoffgehalt von 35 bis 60, vorzugsweise von 40 bis 55 Gewichtsprozent aufweist und deren Viskosität im Bereich von 0,1 bis 3, vorzugsweise 0,2 bis 1,5 Pa · s liegt (gemessen im Epprecht-Rheometer bei einer Temperatur von 23°C nach DIN 53788).

Das Polymer c) ist insbesondere ein Homopolymer eines Vinylesters einer Monocarbonsäure mit 2, 3 oder 4 Kohlenstoffatomen, nämlich vorzugsweise Polyvinylacetat sowie Polyvinylpropionat und Polyvinylbutyrat. Zur Herstellung der erfindungsgemäßen Kunststoffdispersion wird das Polymer c) in Form einer wäßrigen Dispersion eingesetzt, die einen Feststoffgehalt von 35 bis 60, vorzugsweise 40 bis 55 Gewichtsprozent aufweist und deren Viskosität im Bereich von 10 bis 40, vorzugsweise 20 bis 34 Pa · s liegt (gemessen im Epprecht-Rheometer bei einer Temperatur von 23°C nach DIN 53788).

Die Komponente d) der erfindungsgemäßen Kunststoffdispersion ist ein faseriges Material, das als Füllstoff dient. Das faserige Material ist im allgemeinen ein organisches Material und natürlichen Ursprungs oder auch synthetisch. Geeignete Materialien sind Glasfasern, Kohlenstoffasern sowie Cellulosefasern, Kunststoffasern wie Polyester-, Polyamid- oder Polyacrylnitrilfasern und insbesondere Lederfasern. Die Lederfasern enthält man üblicherweise durch Zerkleinern von Abfällen aus lohgarem oder chromgarem Leder; letzteres ist im Rahmen der Erfindung besonders geeignet. Statt eines einzigen Fasermaterials können auch Gemische verschiedener Materialien eingesetzt werden. Zur Herstellung der erfindungsgemäßen Kunststoffdispersion wird das Fasermaterial in Form einer wäßrigen Suspension eingesetzt. Der Feststoffgehalt dieser Suspension liegt normalerweise im Bereich von 3 bis 10, vorzugsweise von 4 bis 8 Gewichtsprozent.

Die erfindungsgemäße Kunststoffdispersion wird hergestellt durch gleichmäßiges und intensives Vermischen von wäßrigen Dispersionen der Polymeren a), b) und c) und einer wäßrigen Suspension des faserigen Füllstoffs d) bei einer Temperatur von 10 bis 30°C, vorzugsweise bei Raumtemperatur. Zum Herstellen des Gemisches genügt normalerweise ein Zeitraum von 5 bis 10 Minuten. Als Mischgefäß ist jedes Gefäß geeignet, das mit einem Mischwerkzeug, z.B. einem Rüher, versehen werden kann. Es ist empfehlenswert, zunächst die Suspension des Fasermaterials im Mischgefäß vorzulegen und dann das Gemisch der Polymerdispersionen in die Suspension einzumischen. Dabei ist es gegebenenfalls zweckmäßig, vor dem Vermischen sowohl das Dispersionsgemisch als auch die Füllstoffsuspension durch Verdünnen mit Wasser auf einen niedrigen Feststoffgehalt einzustellen.

Die erfindungsgemäße Kunststoffdispersion wird zur Herstellung von Folien mit schwingungsdämpfenden Eigenschaften verwendet. Dazu wird die Kunststoffdispersion unter ständiger Durchmischung, vorzugsweise durch Rühren, mit einem wasserlöslichen Koaguliermittel versetzt. Als Koaguliermittel wird ein Elektrolyt verwendet, beispielsweise eine schwache organische Säure wie Ameisensäure oder Essigsäure oder vorzugsweise ein neutral oder schwach sauer reagierendes Salz wie Calciumchlorid, Natriumsulfat, Aluminiumsulfat oder Alaun. Das Koaguliermittel wird vorzugsweise in verdünnter wäßriger Lösung eingesetzt, deren Gehalt an Koaguliermittel im Bereich von 5 bis 20, vorzugsweise 8 bis 15 Gewichtsprozent liegt. Die Menge des Koaguliermittels beträgt 2 bis 20, vorzugsweise 5 bis 10 Gewichtsprozent (bezogen auf die Dispersion). Zur Vervollständigung der Koagulation der Polymeren wird das Gemisch gegebenenfalls durch Zugabe einer wäßrigen Lösung einer anorganischen Base, z.B. Ammoniaklösung, Natronlauge oder Kalilauge, auf einen pH-Wert von 7 bis 9, vorzugsweise 7,1 bis 8,5, eingestellt. Der Endpunkt der Koagulation ist daran erkennbar, daß eine Probe des Koagulationsgemisches beim Filtrieren ein klares Filtrat ergibt. Nach Beendigung der Kogulation wird das erhaltene Gemisch über ein ebenes Filter filtriert, vorzugsweise unter Anwendung von vermindertem Druck, beispielsweise bei einem Druck von $10^{-4}$ bis 15 mbar. Der danach erhaltene flächige Filterkuchen wird gegebenenfalls noch mit Hilfe einer Presse bei einem Druck von vorzugsweise 20 bis 30 bar weiter entwässert. Anschließend wird die erhaltene Folie getrocknet, vorzugsweise bei einer Temperatur von 20 bis 40°C.

Die erfindungsgemäße Folie weist eine Dicke von 1 bis 5, vorzugsweise 1,5 bis 4 mm auf. Die Folie wirkt schwingungsdämpfend, insbesondere bei Frequenzen von 100 und 1000 Hertz im Temperaturbereich von höchstens −20°C bis mindestens +40°C.

Das Dämpfungsverhalten der erfindungsgemäßen Folie wird durch des Ermittlung des Verlustfaktors im Biegeschwingungsversuch nach DIN 53 440 geprüft. Der dabei verwendete Probekörper besteht aus einem Stahlblech und der zu prüfenden Folie, die mit dem Stahlblech verbunden ist, vorzugsweise durch Verkleben. Die Folie hat eine Dicke von 1,5 bis 2,5 mm, während das Stahlblech 1,0 mm dich ist; dabei beträgt der Belagsfaktor, d.h. der mit 100 multiplizierte Quotient aus der Folienmasse und der Blechmasse, 40 bis 60 Prozent, vorzugsweise höchstens 50 Prozent. Die Messung wird jeweils bei einer Frequenz von 100 Hertz und von 1000 Hertz durchgeführt. Das Dämpfungsverhalten ist als gut zu bewerten, wenn die Temperaturbandbreite sich bei einem Verlustfaktor von mindestens 0,05 über einen Bereich von mindestens 60°C erstreckt, wobei die Temperaturuntergrenze höchstens −20°C beträgt.

Die nachstehenden Beispiele dienen zur näheren Erläuterung der Erfindung. Prozentangaben und Verhältnisangaben beziehen sich jeweils auf das Gewicht.

Beispiel 1

In einem 5-1-Kunststoffbehälter, in den ein Flügelrührer eintaucht, werden 1000 g einer wäßrigen, 4% chromgare Lederfasern enthaltenden Suspension vorgelegt und unter ständigem Rühren mit 1600 g Wasser auf einen Feststoffgehalt von 1,5% verdünnt. Zu dieser verdünnten Suspension werden unter Rühren 1000 g eines Dispersionsgemisches innerhalb von 5 min zudosiert. Dieses Dispersionsgemisch wurde hergestellt aus a) 200 g einer wäßrigen Dispersion eines Copolymers aus Essigsäurevinylester und Acrylsäure-(2-ethyl-hexyl)-ester (Monomerverhältnis 35:65; Einfriertemperatur −32°C) mit einem Feststoffgehalt von 50%, b) 100 g einer wäßrigen Dispersion eines Copolymers aus Essigsäurevinylester und Acrylsäurebutylester (Monomerverhältnis 70:30, Einfriertemperatur 2°C) mit einem Feststoffgehalt von 53% und c) 100 g einer wäßrigen Dispersion eines Essigsäurevinylester - Homopolymers (Einfriertemperatur 29°C) mit einem Feststoffgehalt von 60% sowie 3600 g Wasser als Verdünnungsmittel. Das Vermischen des Dispersionsgemisches mit der Füllstoffsuspension erfolgt bei einer Temperatur von 23°C.

Beispiel 2

800 g der nach Beispiel 1 erhaltenen füllstoffhaltigen Kunststoffdispersion werden innerhalb von 10 min mit 45 ml einer 10 prozentigen wäßrigen Aluminiumsulfatlösung versetzt und danach durch Zugabe von 10 prozentiger Natronlauge auf einen pH-Wert von 8 eingestellt. Nach Beendigung der Koagulation wird das Gemisch über eine Porzellannutsche mit einer Filterfläche von 531 cm² bei einem Druck von 12 mbar (Wasserstrahlpumpe) abgesaugt. Der Filterkuchen wird dann über Nacht bei einer Temperatur von 25°C getrocknet. Die erhaltene Folie hat eine Dicke von 1,5 mm.

Das Dämpfungsverhalten der Folie wird im Biegeschwingungsversuch nach DIN 53 440 untersucht. Der Probekörper besteht aus einem Stahlblech mit einer Diche von 0,5 mm, das durch Verkleben mit der Folie verbunden ist. Die Prüfung ergibt bei einem Belagsfaktor von 34,6% einen Verlustfaktor von mindestens 0,05 über eine Temperaturbandbreite von −25°C bis +35°C bei einer Frequenz von 100 Hz und von −20°C bis +40°C bei einer Frequenz von 1000 Hz.

**Patentansprüche**

1. Schwingungsdämpfende Folie auf Basis von füllstoffhaltigen Mischungen aus mehreren verschiedenen Vinylhomo- und/oder -copolymerisaten mit unterschiedlichen Einfriertemperaturen, welche eine vergrößerte Temperaturbandbreite der optimalen Schwingungsdämpfung bzw. Entdröhnungswirkung besitzt, dadurch gekennzeichnet, daß die Folie

a) 4 bis 54 Gew.-% eines Copolymers aus einem Vinylester einer Monocarbonsäure und einem Acrylsäurealkylester mit einer Einfriertemperatur von höchstens −10°C,

b) 4 bis 54 Gew.-% eines Copolymers aus einem Vinylester einer Monocarbonsäure und einem Acrylsäureester mit einer Einfriertemperatur von 0 bis 20°C,

c) 2 bis 52 Gew.-% eines Homopolymers eines Vinylesters einer Monocarbonsäure mit einer Einfriertemperatur von mehr als 20°C und

d) 10 bis 80 Gew.-% eines faserigen Materials, wobei die Menge der Komponente d) auf die Summe der Polymeren a), b) und c) bezogen ist, enthält und dadurch erhalten wird, daß man ein Gemisch aus

A) 10 bis 85 Gewichtsteilen einer wäßrigen Dispersion eines Copolymers aus einem Vinylester einer Monocarbonsäure und einem Acrylsäureester mit einer Einfriertemperatur von höchstens −10°C,

B) 10 bis 85 Gewichtsteilen einer wäßrigen Dispersion eines Copolymers aus einem Vinylester einer Monocarbonsäure une einem Acrylsäureester mit einer Einfriertemperatur von 0 bis 20°C und

C) 5 bis 80 Gewichtsteilen einer wäßrigen Dispersion eines Homopolymers eines Vinylesters einer Monocarbonsäure mit einer Einfriertemperatur von mehr als 20°C,

wobei die Summe der Gewichtsteile A+B+C 100 Gewichtsteile beträgt, bei einer Temperatur von 10 bis 30°C gleichmäßig in

D) 10 bis 400 Gewichtsteile einer wäßrigen Suspension eines faserigen Materials

einmischt, die Mischung durch Zusatz eines wasserlöslichen Koaguliermittels koaguliert, das Koagulat durch Filtration über ein ebenes Filter als flächigen Filterkuchen isoliert, den Filterkuchen gegebenenfalls mit Hilfe einer Presse unter Druck entwässert, und die erhaltene Folie trocknet.

2. Schwingungsdämpfende Folie nach Anspruch 1, dadurch gekennzeichnet, daß die Komponente a) ein Copolymer aus 20 bis 45 Gew.-% eines Vinylesters einer Monocarbonsäure mit 2, 3 oder 4 C-Atomen und 80 bis 55 Gew.-% eines Acrylsäurealkylesters mit einem höheren, 6 bis 10 C-Atome aufweisenden Alkylrest, die Komponente b) ein Copolymer aus 55 bis 85 Gew.-% eines Vinylesters einer Monocarbonsäure mit 2, 3 oder 4 C-Atomen und 45 bis 15 Gew.-% eines Acrylsäurealkylesters mit einem niederen, 1 bis 4 C-Atome aufweisenden Alkylrest und die Komponente c) ein Homopolymer eines Vinylesters einer Monocarbonsäure mit 2, 3 oder 4 C-Atomen ist.

3. Schwingungsdämpfende Folie nach Ansprüchen 1 und 2, dadurch gekennzeichnet, daß die Komponente a) eine Einfriertemperatur von −50 bis −10°C und die Komponente c) eine Einfriertemperatur von 21 bis 50°C aufweist.

4. Schwingungsdämpfende Folie nach Ansprüchen 1 bis 3, dadurch gekennzeichnet, daß die Komponente d) aus Lederfasern besteht.

5. Verfahren zur Herstellung einer schwingungsdämpfenden Folie mit vergrößerter Temperaturbandbreite der optimalen Schwingungsdämpfung bzw. Entdröhnungswirkung auf Basis von füllstoffhaltigen Mischungen aus mehreren verschiedenen Vinylhomo- und/oder -copolymerisaten mit unterschiedlichen Einfriertemperaturen aus einer wäßrigen Kunststoffdispersion, enthaltend mehrere verschiedene Vinylpolymere, dadurch gekennzeichnet, daß man ein Gemisch aus

A) 10 bis 85 Gewichtsteilen einer wäßrigen Dispersion eines Copolymers aus einem Vinylester einer Monocarbonsäure und einem Acrylsäureester mit einer Einfriertemperatur von höchstens −10°C,

B) 10 bis 85 Gewichtsteilen einer wäßrigen Dispersion eines Copolymers aus einem Vinylester einer Monocarbonsäure und einem Acrylsäureester mit einer Einfriertemperatur von 0 bis 20°C und

C) 5 bis 80 Gewichtsteilen einer wäßrigen Dispersion eines Homopolymers eines Vinylesters einer Monocarbonsäure mit einer Einfriertemperatur von mehr als 20°C,

wobei die Summe der Gewichtsteile A+B+C 100 Gewichtsteile beträgt, bei einer Temperatur von 10 bis 30°C gleichmäßig in

D) 10 bis 400 Gewichtsteile einer wäßrigen Suspension eines faserigen Materials

einmischt, die Mischung durch Zusatz eines wasserlöslichen Koaguliermittels koaguliert, das Koagulat durch Filtration über ein ebenes Filter als flächigen Filterkuchen isoliert, den Filterkuchen entwässert, gegebenenfalls mit Hilfe einer Presse unter Druck, und die erhaltene Folie trocknet.

6. Verfahren nach Anspruch 5, dadurch gekennzeichnet, daß die Komponente D) 3 bis 10 Gew.-% faseriges Material enthält.

7. Verfahren nach Ansprüchen 5 und 6, dadurch gekennzeichnet, daß die Komponente D) Lederfasern enthält.

8. Verfahren nach Ansprüchen 5 bis 7, dadurch gekennzeichnet, daß als Koaguliermittel ein Elektrolyt in einer Menge von 2 bis 20 Gew.-%, bezogen auf die Dispersion, eingesetzt wird.

9. Verfahren nach Ansprüchen 5 bis 8, dadurch gekennzeichnet, daß die getrocknete Folie eine Dicke von 1 bis 5 mm aufweist.

**Revendications**

1. Feuille amortisseuse de vibrations à base de mélanges contenant une charge et constitués de plusieurs homopolymères et/ou compolymères vinyliques différents ayant des températures de transition vitreuse différentes, feuille qui presente une largeur de bande de température étendue de l'amortissement optimal des vibrations ou de l'effet antivrombissement optimal et qui est caractérisé en ce qu'elle contient:

a) de 4 à 54% en poids d'un copolymère d'un ester vinylique d'acide monocarboxylique et d'un acrylate d'alkyle qui présente une témperature de transition vitreuse d'au plus −10°C,

b) de 4 à 54% en poids d'un copolymère d'un ester vinylique d'acide monocarboxylique et d'un ester acrylique qui présente une température de transition vitreuse de 0 à 20°C,

c) de 2 à 52% en poids d'un homopolymère d'un ester vinylique d'acide monocarboxylique présentant une température de transition vitreuse de plus de 20°C, et

d) de 10 à 80% en poids d'une matière fibreuse, la quantité de cette composante d) étant rapportée à la somme des polymères a), b) et c), et en ce que, pour fabriquer cette feuille, on introduit en mélangeant intimement, à une température de 10 à 30°C, un mélange constitué:

A) de 10 à 85 parties en poids d'une dispersion aqueuse d'un copolymère dérivant d'un ester vinylique d'acide monocarboxylique et d'un ester acrylique et ayant une température de transition vitreuse d'au plus −10°C,

B) de 10 à 85 parties en poids d'une dispersion aqueuse d'un copolymère dérivant d'un ester vinylique d'acide monocarboxylique et d'un ester acrylique et ayant une température de transition vitreuse de 0 à 20°C, et

C) de 5 à 80 parties en poids d'une dispersion aqueuse d'un homopolymère dérivant d'un ester vinylique d'acide monocarboxylique et ayant une température de transition vitreuse de plus de 20°C,

la somme des parties en poids A+B+C étant égale à 100, dans

D) 10 à 400 parties en poids d'une suspension aqueuse d'une matière fibreuse,

on coagule le mélange en y ajoutant un coagulant soluble dans l'eau, on isole le produit coagulé sous la forme d'un gâteau de filtration plat, par filtration sur un filtre plan, on déshydrate le gâteau de filtration sous pression, éventuellement au moyen d'une presse, et on sèche la feuille obtenue.

2. Feuille amortissement de vibrations selon la revendication 1, caractérisée en ce que le composante a) est un copolymère constitué de 20 à 45% en poids d'un ester vinylique d'un acide monocarboxylique contenant 2, 3 ou 4 atomes de carbone et de 80 à 55% en poids d'un acrylate d'alkyle à alkyle supérieur, c'est-à-dire contenant de 6 à 10 atomes de carbone, la composante b) est un copolymère constitué de 55 à 85% en poids d'un ester vinylique d'un acide monocarboxylique contenant 2, 3 ou 4 atomes de carbone et de 45 à 15% en poids d'un acrylate d'alkyle à alkyle inférieur, c'est-à-dire contenant de 1 à 4 atomes de carbone, et la composante c) est un homopolymère d'un ester vinylique d'un acide moncarboxylique contenant 2, 3 ou 4 atomes de carbone.

3. Feuille amortissement de vibrations selon l'une des revendications 1 et 2, caractérisée en ce que la composante a) a une température de transition vitreuse de −50 à −10°C et la composante c) a une température de transition vitreuse de 21 à 50°C.

4. Feuille amortissement de vibrations selon l'une quelconque des revendications 1 à 3, caractérisée en ce que le composante d) est constituée de fibres de cuir.

5. Procédé pour fabriquer une feuille antivibrations à grande largeur de bande de température de l'amortissement optimal de vibrations ou de l'action antivrombissement optimale, à base de mélanges renfermant une charge et constitués de plusieurs homopolymères et/ou copolymères vinyliques différents ayant des températures de transition vitreuse différentes, à partir d'une dispersion aqueuse ede matière plastique contenant plusieurs polymères vinyliques différents, procédé caractérisé en ce qu'on incorpore uniformément, à une température de 10 à 30°C, un mélange constitué de:

A) de 10 à 85 parties en poids d'une dispersion aqueuse d'un copolymère dérivant d'un ester vinylique d'acide monocarboxylique et d'un ester acrylique et présentant une température de transition vitreuse d'au plus −10°C,

B) de 10 à 85 parties en poids d'une dispersion aqueuse d'un copolymère dérivant d'un ester vinylique d'acide monocarboxylique et d'un ester acrylique et présentant une température de transition vitreuse de 0 à 20°C et

C) de 5 à 80 parties en poids d'une dispersion aqueuse d'un homopolymère dérivant d'un ester vinylique d'acide monocarboxylique et présentant une température de transition vitreuse de plus de 20°C,

la somme des parties en poids A+B+C étant égale à 100, dans

D) 10 à 400 parties en poids d'une suspension aqueuse d'une matière fibreuse,

on coagule le mélange en y ajoutant un coagulant soluble dans l'eau, on isole le produit coagulé par filtration sur un filtre plan, sous la forme d'un gâteau de filtration plat, on déshydrate le gâteau de filtration, éventuellement au moyen d'une presse, sous pression, et on sèche la feuille obtenue.

6. Procédé selon la revendication 5 caractérisé en ce que la composante D) contient de 3 à 10% en poids de la matière fibreuse.

7. Procédé selon l'une des revendications 5 et 6, caractérisé en ce que la composante D) contient des fibres de cuir.

8. Procédé selon l'une quelconque des revendications 5 à 7, caractérisé en ce qu'on utilise, comme agent coagulant, un électrolyte en une quantité de 2 à 20% en poids par rapport à la dispersion.

9. Procédé selon l'une quelconque des revendications 5 à 8, caractérisé en ce que la feuille séchée a une épaisseur de 1 à 5 mm.

**Claims**

1. Vibration-damping sheet based on mixtures which contain a filler and are composed of several different vinyl homopolymers and/or copolymers with different glass transition temperatures, said sheet having a large temperature band width of the optimal vibration damping or sound absorbing effect, characterized in that the sheet contains

a) 4 to 54 per cent by weight of a copolymer of a vinyl ester of a monocarboxylic acid and an alkyl acrylate with a glass transition temperature of at most −10°C,

b) 4 to 54 per cent by weight of a copolymer of a vinyl ester of a monocarboxylic acid and an acrylate with a glass transition temperature of from 0 to 20°C,

c) 2 to 52 per cent by weight of a homopolymer of a vinyl ester of a monocarboxylic acid with a glass transition temperature greater than 20°C and

d) 10 to 80 per cent by weight of a fibrous material, the quantity of component d) being relative to the sum of the polymers a), b) and c), and is prepared by mixing uniformly a mixture of

A) 10 to 85 parts by weight of an aqueous dispersion of a copolymer of a vinyl ester of a monocarboxylic acid and an acrylate with a glass transition temperature of at most −10°C,

B) 10 to 85 parts by weight of an aqueous dispersion of a copolymer of a vinyl ester of a monocarboxylic acid and an acrylate with a glass transition temperature of from 0 to 20°C and

C) 5 to 80 parts by weight of an aqueous dispersion of a homopolymer of a vinyl ester of a monocarboxylic acid with a glass transition temperature greater than 20°C, the sum of the parts by weight A+B+C being 100 parts by weight, at a temperature of 10 to 30°C, into

D) 10 to 400 parts by weight of an aqueous suspension of a fibrous material,

by coagulating the mixture by the addition of a water-soluble coagulant, by isolating the coagulate in the form of a filter cake by filtration over a flat filter, by dehydrating the filter cake optionally by means of a press under pressure and by drying the sheet obtained.

2. Vibration-damping sheet according to claim 1, wherein component a) is a copolymer of 20 to 45 per cent by weight of a vinyl ester of a monocarboxylic acid having 2, 3 or 4 carbon atoms and 80 to 55 per cent by weight of an alkyl acrylate having a higher alkyl radical which contains 6 to 10 carbon atoms, component b) is a copolymer of 55 to 85 per cent by weight of a vinyl ester of a monocarboxylic acid having 2, 3 or 4 carbon atoms and 45 to 15 per cent by weight of an alkyl acrylate having a lower alkyl radical which contains 1 to 4 carbon atoms, and component c) is a homopolymer of a vinyl ester of a monocarboxylic acid having 2, 3 or 4 carbon atoms.

3. Vibration-damping sheet according to claims 1 and 2, wherein component a) has a glass transition temperature of from −50 to −10°C and component c) has a glass transition temperature of from 21 to 50°C.

4. Vibration-damping sheet according to claims 1 to 3, wherein component d) consists of leather fibers.

5. Process for the preparation of a vibration-damping sheet with a large temperature band width of the optimal vibration damping or sound absorbing effect based on mixtures which contain a filler and are composed of several different vinyl homopolymers and/or copolymers with different glass transition temperatures, from an aqueous plastic dispersion containing several different vinyl polymers, characterized in that a mixture composed of

A) 10 to 85 parts by weight of an aqueous dispersion of a copolymer of a vinyl ester of a monocarboxylic acid and an acrylate with a glass transition temperature of at most −10°C,

B) 10 to 85 parts by weight of an aqueous dispersion of a copolymer of a vinyl ester of a monocarboxylic acid and an acrylate with a glass transition temperature of from 0 to 20°C and

C) 5 to 80 parts by weight of an aqueous dispersion of a homopolymer of a vinyl ester of a monocarboxylic acid with a glass transition temperature greater than 20°C, the sum of the parts by weight A+B+C being 100 parts by weight,

is mixed uniformly, at a temperature of 10 to 30°C, into

D) 10 to 400 parts by weight of an aqueous suspension of a fibrous material,

the mixture is coagulated by the addition of a water-soluble coagulant, the coagulate is isolated in the form of a filter cake by filtration over a flat filter, the filter cake is dehydrated, optionally by means of a press under pressure, and the resulting sheet is dried.

6. Process according to claim 5, characterized in that component (D) contains 3 to 10 per cent by weight of fibrous material.

7. Process according to claims 5 and 6, characterized in that component D) contains leather fibers.

8. Process according to claims 5 to 7, characterized in that an electrolyte is used as a coagulant in a quantity of from 2 to 20 per cent by weight, relative to the dispersion.

9. Process according to claims 5 to 8, characterized in that the dried sheet has a thickness of from 1 to 5 mm.